# EUROPEAN PATENT APPLICATION

(11) **EP 1 605 256 A1**
(43) Date of publication of application: **14.12.2005**
(21) Application number: 05012249.8
(22) Date of filing: 07.06.2005
(51) Int. Cl.: G01N 27/407

(54) **Solid electrolytic oxygen sensor and method of producing same**

(30) Priority: 10.06.2004 JP 2004172416
(71) Applicant: Hitachi, Ltd., Tokyo 100-8280 (JP)
(72) Inventor: Sakai, Shoichi c/o Hitachi Ltd., Isesaki-shi Gunma 372-0023 (JP); Ichiyanagi, Futoshi c/o Hitachi Ltd., Isesaki-shi Gunma 372-0023 (JP); Onozuka, Junji c/o Hitachi Ltd., Isesaki-shi Gunma 372-0023 (JP); Orimo, Yasuji c/o Hitachi Ltd., Isesaki-shi Gunma 372-0023 (JP)
(74) Representative: Weber, Joachim

(57) **Abstract**

Oxygen-concentration detecting element including (a) a base member constructed of a first insulating material; (b) an electric heater layer formed on the base member to generate a heat when electrically energized; (c) an oxygen-detecting laminated unit formed on the base member, the unit including a solid electrolyte layer activated by the heat; (d) a printed protecting layer covering the base member, the electric heater layer and the oxygen-detecting laminated unit, being constructed of a mixture of a second insulating material and a solid electrolyte material, and having a porous structure provided with voids derived from a void forming agent contained in an amount of 10-80 volume %, based on a total volume of the second insulating material and the void forming agent, prior to a baking for producing the oxygen concentration detecting element; and (e) a porous protecting layer covering the printed protecting layer.

## Description

### BACKGROUND OF THE INVENTION

The present invention relates in general to an oxygen sensor and a method of producing the same and more specifically to an oxygen-concentration detecting element used for the oxygen sensor and a method of producing the element.

In general, a modernized motor vehicle powered by an internal combustion engine is equipped at its exhaust pipe with an oxygen sensor for sensing the oxygen concentration of the exhaust gas from the engine, and, based on the oxygen concentration thus sensed, the air/fuel mixture fed to the engine is feedback controlled to have a stoichiometric ratio (i.e., A/F = 14.7).

US Patent 5,389,223, corresponding to Japanese Patent Laid-open Publication JP-A-3-506073, discloses an electrochemical measuring sensor. As shown in Fig. 4 of this US patent, the electrochemical measuring sensor has solid electrolyte sheets 1, 2, 3 and 3', electrodes 4 and 5 of an oxygen pumping cell (pumping electrodes), electrodes 6 and 7 of an electrochemical oxygen concentration cell (sensor electrodes), a heater 12 that generates heat for activating the solid electrolyte sheets, and insulations 13 and 13' between which the heater is interposed. In operation, the oxygen concentration of the test gas is detected by introducing the test gas from a diffusion channel of the solid electrolyte sheet 2.

### SUMMARY OF THE INVENTION

The above-mentioned conventional electrochemical measuring sensor has a problem that the solid electrolyte sheets 1 and 3' may be exfoliated due to the lack of the provision of a protecting layer for protecting outer sides of these solid electrolyte sheets.

In order to solve this problem, it is considered to form a porous protecting layer on the solid electrolyte sheet. It is, however, difficult to directly form this porous protecting layer on the solid electrolyte sheet, since the porous protecting layer is formed by plasma spraying. Even if it is directly formed thereon, its adhesion is insufficient, thereby causing an easy exfoliation.

It is therefore an object of the present invention to provide an oxygen-concentration detecting element having a porous protecting layer with high adhesion strength.

It is another object of the present invention to provide a green body for the oxygen-concentration detecting element.

It is still another object of the present invention to provide a method of producing the oxygen-concentration detecting element.

According to the present invention, there is provided an oxygen-concentration detecting element comprising:
a base member constructed of a first insulating material, an outer surface of the base member having a first position and a second position that is different from the first position;
an electric heater layer formed on the first position of the base member to generate a heat when electrically energized;
an oxygen-detecting laminated unit formed on the second position of the base member, the unit including a solid electrolyte layer and reference and detecting electrodes between which the solid electrolyte layer is operatively sandwiched, the solid electrolyte layer being activated by the heat from the electric heater layer;
a printed protecting layer covering the base member, the electric heater layer, and the oxygen-detecting laminated unit, the printed protecting layer being constructed of a mixture of a second insulating material and a solid electrolyte material, the printed protecting layer having a porous structure provided with a plurality of voids derived from a void forming agent that has been contained in an amount of 10-80 volume %, based on a total volume of the second insulating material and the void forming agent, in the second insulating material, prior to a baking for producing the oxygen-concentration detecting element; and
a porous protecting layer covering the printed protecting layer.

According to the present invention, there is provided a green body for producing the oxygen-concentration detecting element. This green body comprises:
a base member constructed of a first insulating material, an outer surface of the base member having a first position and a second position that is different from the first position;
an electric heater layer formed on the first position of the base member to generate a heat when electrically energized;
an oxygen-detecting laminated unit formed on the second position of the base member, the unit including a solid electrolyte layer and reference and detecting electrodes between which the solid electrolyte layer is operatively sandwiched, the solid electrolyte layer being activated by the heat from the electric heater layer; and
a printed protecting layer covering the base member, the electric heater layer, and the oxygen-detecting laminated unit, the printed protecting layer being constructed of a mixture of a second insulating material and a solid electrolyte material, the second insulating material containing 10-80 volume % of a void forming agent that produces a plurality of voids by baking the green body to make the printed protecting layer have a porous structure.

According to the present invention, there is provided a method of producing an oxygen-concentration detecting element, comprising the steps of:
(a) preparing a base member constructed of a first insulating material to have an outer surface having a first position and a second position that is different from the first position;
(b) forming an electric heater layer on the first position of the base member to generate a heat when electrically energized;
(c) forming an oxygen-detecting laminated unit on the second position of the base member such that the unit includes a solid electrolyte layer and reference and detecting electrodes between which the solid electrolyte layer is operatively sandwiched and that the solid electrolyte layer is activated by the heat from the electric heater layer;
(d) forming a printed protecting layer to cover the base member, the electric heater layer, and the oxygen-detecting laminated unit, the printed protecting layer being constructed of a mixture of a solid electrolyte material and a second insulating material containing 10-80 volume % of a void forming agent, thereby producing a green body having the base member, the electric heater layer, the oxygen-detecting laminated unit, and the printed protecting layer;
(e) baking the green body such that the void forming agent disappears to produce a plurality of voids in the printed protecting layer and to make the printed protecting layer have a porous structure; and
(f) forming a porous protecting layer to cover the printed protecting layer.

The other objects and features of this invention will become understood from the following description with reference to the accompanying drawings.

### BRIEF DESCRIPTION OF THE DRAWINGS

Fig. 1 is a side view showing an oxygen-concentration detecting element according to an embodiment of the present invention;
Fig. 2 is an enlarged sectional view taken along lines 2-2 of Fig. 1;
Fig. 3 is a flow chart showing a method of producing the oxygen-concentration detecting element in accordance with an embodiment of the present invention;
Fig. 4 is a layout of the oxygen-concentration detecting element; and
Fig. 5 is a sectional view showing an exemplary oxygen sensor equipped with the oxygen-concentration detecting element.

### DESCRIPTION OF THE PREFERRED EMBODIMENTS

As stated above, prior to a baking or sintering for producing the oxygen-concentration detecting element, the second insulating material of the printed protecting layer contains 10-80 volume % of a void forming agent. This void forming agent (e.g., carbon and theobromine) disappears by the baking, thereby making the printed protecting layer have a porous structure having a plurality of voids. The printed protecting layer resulting from the baking has an uneven outer surface, too. Thus, the porous protecting layer is strongly adhered to the printed protecting layer, thereby preventing exfoliation of the porous protecting layer. With this, the oxygen-concentration detecting element is prevented from deterioration and substantially improved in durability. Thus, it can effectively be used for an oxygen sensor, which detects oxygen concentration of exhaust gas.

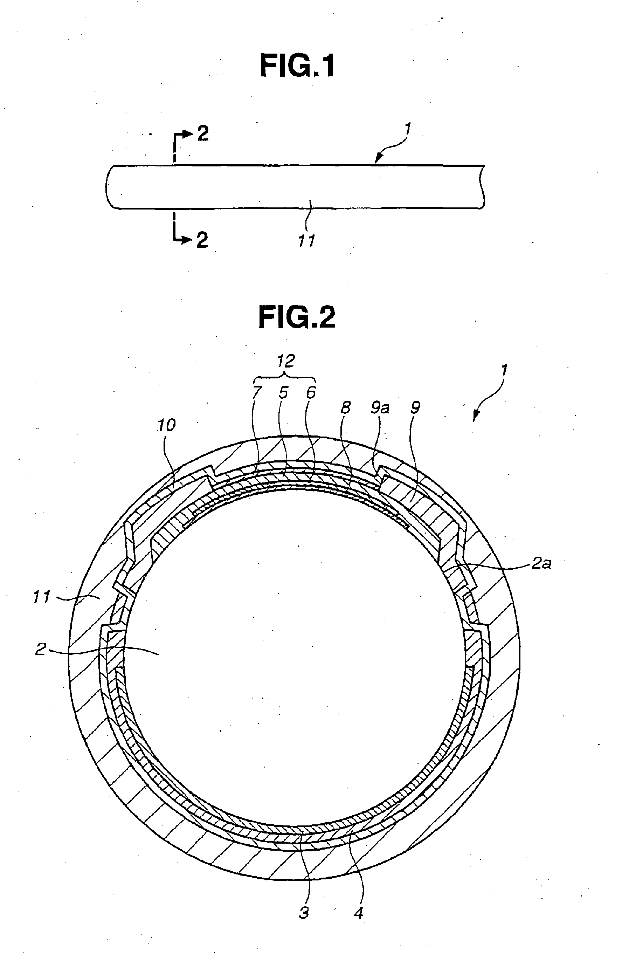

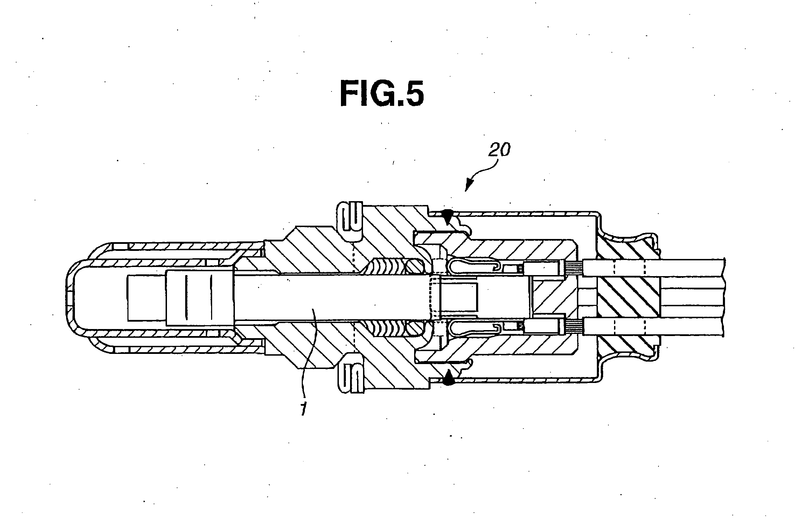

With reference to Figs. 1-5, an oxygen-concentration detecting element according to an embodiment of the present invention will be described in detail in the following.

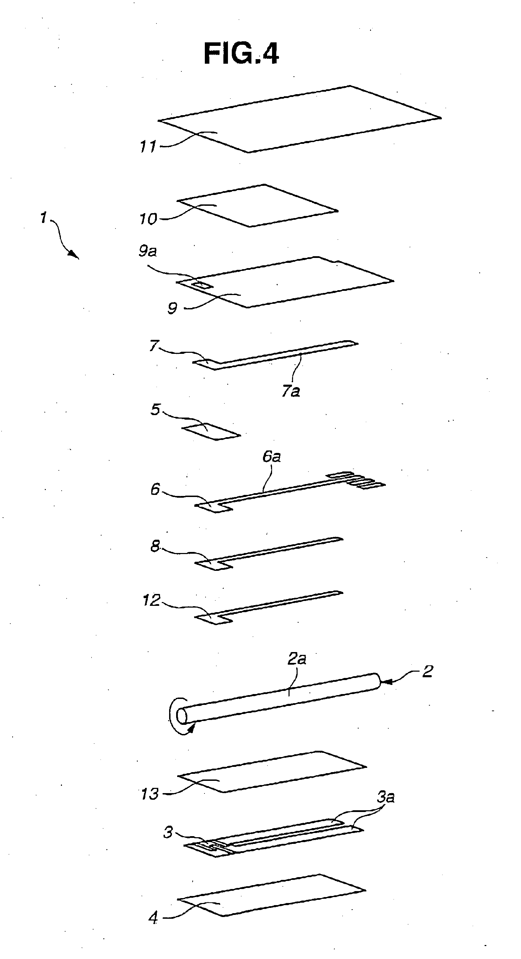

As shown in Fig. 1, oxygen-concentration detecting element 1 has an elongated cylindrical shape. As shown in Figs. 2 and 4, oxygen-concentration detecting element 1 has core rod (or base member) 2, heater pattern (or electric heater layer) 3 formed on circumferential or outer surface 2a of core rod 2, heater insulating layer 4 entirely covering the outer surface of heater pattern 3, solid electrolyte layer 5 that is disposed on circumferential surface 2a of core rod 2 at a diametrically opposed zone of heater pattern 3, reference electrode 6 formed on an inner surface of solid electrolyte layer 5, detecting electrode 7 formed on an outer surface of solid electrolyte layer 5, stress damping layer 8 that is intimately disposed between an inner surface of reference electrode 6 and circumferential surface 2a of core rod 2, dense layer 9 that covers the outer surface of solid electrolyte layer 5 and detecting electrode 7, rectangular window opening 9a (see Fig. 4) defined in dense layer 9, printed protecting layer 10 covering dense layer 9 and heater insulating layer 4, and porous protecting layer 11 entirely covering printed protecting layer 10.

Core rod 2 is constructed of a ceramic material (e.g., alumina) as an insulating material. Core rod 2 is formed into a cylindrical solid member. With this, it is possible to minimize the influences due to the fixing direction of core rod 2 and due to the gas flow direction. Thus, it is possible to obtain stable output characteristic.

Heater pattern 3 is constructed of a conductive material, such as tungsten, platinum or the like that generates heat when electrically energized. Heater pattern 3 is integrally formed with lead line portions 3a (see Fig. 4). That is, when electrically energized through lead line portions 3a, heater pattern 3 generates heat for heating and thus activating solid electrolyte layer 5.

Heater insulating layer 4 is constructed of an insulating material and functions to insulate heater pattern 3 from the surrounding parts.

Solid electrolyte layer 5 is constructed of a material that includes zirconia as a major material. For production of solid electrolyte layer 5, a powder of zirconia and a given wt% of powder of yttria can be mixed together to prepare a paste material. As will be described hereinafter, this paste material is baked together with other laminated layers. Solid electrolyte layer 5 generates between reference and detecting electrodes 6 and 7 an electromotive force in accordance with a difference in oxygen concentration of surrounding atmosphere. That is, due to a difference in oxygen concentration, oxygen ions are moved in solid electrolyte layer 5 in the direction along the thickness of the layer 5.

Solid electrolyte layer 5 and reference and detecting electrodes 6 and 7 thus constitute oxygen detecting laminated unit 12 that converts the detected oxygen concentration to a corresponding electric signal.

Both reference and detecting electrodes 6 and 7 are constructed of a conductive material (e.g., platinum) and allows oxygen gas to penetrate therethrough. As is seen from Fig. 4, reference and detecting electrodes 6 and 7 are respectively formed with lead line portions 6a and 7a. That is, the output power produced between reference and detecting electrodes 6 and 7 is lead to a meter section (not shown) through lead line portions 6a and 7a.

Stress damping layer 8 is constructed of a ceramic mixture of an insulating material (e.g., alumina) and a solid electrolyte material (e.g., zirconia). Stress damping layer 8 functions to damp a stress difference that would be produced between solid electrolyte 5 and core rod 2 during the baking of a green body of solid electrolyte 5. In addition to this function, stress damping layer 8 forms a gas escaping passage through which oxygen gas that has been transmitted to reference electrode 6 through solid electrolyte layer 5 is led to an escaping path (not shown).

Dense layer 9 is constructed of a material, such as a ceramic material like alumina, which does not permit penetration of oxygen gas therethrough. Dense layer 9 entirely covers the outer surface of solid electrolyte layer 5. Detecting electrode 7 is exposed to window opening 9a of dense layer 9. That is, in use, oxygen gas is led to detecting electrode 7 through only window opening 9a.

Printed protecting layer 10 entirely covers outer surfaces of dense layer 9 and heater insulating layer 4, as well as an outer surface of detecting electrode layer 7 that is exposed to window opening 9a of dense layer 9. Printed protecting layer 10 is constructed of a material that does not permit penetration of harmful gases, dusts and the like in the exhaust gas therethrough but permits penetration of oxygen gas therethrough. The material is, for example, a mixture of an insulating material (e.g., alumina) and a solid electrolyte material (e.g., zirconia).

The insulating material content of printed protecting layer 10 is made to be 10 wt% or greater, based on the total weight (100 wt%) of the insulating material and the solid electrolyte material of printed protecting layer 10. With this, it is possible to make the insulating material content of printed protecting layer 10 conform to that of solid electrolyte layer 5 of oxygen detecting laminated unit 12. Therefore, it is possible to prevent stress concentration to oxygen detecting laminated unit 12 caused by baking contraction difference.

As stated above, prior to a baking for producing oxygen-concentration detecting element 1, a void forming agent is contained in the insulating material of printed protecting layer 10. This void forming agent disappears by the baking, thereby making printed protecting layer 10 have a porous structure having a plurality of voids. The resulting printed protecting layer 10 has an uneven outer surface. Thus, porous protecting layer 11 is strongly adhered to printed protecting layer 10, when porous protecting layer 11 is formed by plasma spraying.

The insulating material of printed protecting layer 10 contains 10-80 volume % of the void forming agent. Herein, the effect on oxygen-concentration detecting element 1 by the difference of the void forming agent content is explained with reference to Table 1. As shown in Table 1, when the amount of the void forming agent is 81 volume % or greater, formability of printed protecting layer 10 becomes inferior and printed protecting layer 10 may be broken. On the other hand, when the amount of the void forming agent is less than 10 volume %, it is not possible to sufficiently obtain the continuous penetration voids in printed protecting layer 10. Therefore, it is not possible to obtain a sufficient adhesion strength of porous protecting layer 11 to printed protecting layer 10. With this, exfoliation of porous protecting layer 11 may happen. It is possible to obtain an oxygen-concentration detecting element having a superior formability of printed protecting layer 10 and a strong adhesion of porous protecting layer 11 to printed protecting layer 10.

**Table 1**

| | Amount of Void Forming Agent | | |
|---|---|---|---|
| | Less than 10 vol. % | 10 to 80 vol. % | Not less than 81 vol. % |
| Layer Formability | Superior | Superior | Inferior |
| Existence of Continuous Penetration Voids | No | Yes | Yes |

Porous protecting layer 11 entirely covers printed protecting layer 10 and serves as the outermost layer of oxygen-concentration detecting element 1. Porous protecting layer 11 is constructed of a porous material that permits penetration of oxygen gas therethrough. Porous protecting layer 11 is rougher in porosity than printed protecting layer 10 is and has a thickness of 50 to 400µm.

Herein, the effect of the difference in film thickness of porous protecting layer 11 is explained, with reference to Table 2. As shown in Table 2, oxygen-concentration detecting element 1 becomes inferior in water resistance, when the film thickness is less than 50µm. In contrast, the element 1 becomes inferior in response, when the film thickness is greater than 400µm. The element 1 becomes satisfactory in water resistance and response by adjusting the film thickness to 50 to 400µm.

**Table 2**

| | Porous Protecting Layer Thickness | | |
|---|---|---|---|
| | Less than 50µm | 50 to 400µm | Greater than 400µm |
| Water Resistance | Inferior | Superior | Superior |
| Existence of Continuous Penetration Voids | Superior | Superior | Inferior |

In the following, operation of oxygen-concentration detecting element 1 will be briefly described in case that the corresponding oxygen sensor is set in an exhaust pipe that extends from an internal combustion engine (not shown). That is, upon assembly, the outer surface of element 1 is exposed to the interior of the exhaust pipe through openings of the case of the oxygen sensor, and stress damping layer 8 is communicated with the atmosphere.

Upon operation of the engine, heater pattern 3 is energized to generate heat for heating and thus activating solid electrolyte layer 5. With this, the oxygen concentration detecting ability of element 1 is increased.

Under operation of the engine, the exhaust gas from the engine passes by the outer surface of element 1. During this flow of the exhaust gas, oxygen in the exhaust gas is led to solid electrolyte layer 5 through porous protecting layer 11, printed protecting layer 10 and detecting electrode 7, and at the same time, oxygen in the atmosphere is collected around reference electrode 6. Upon this, since stress damping layer 8 has a porous structure, excessive oxygen is exhausted to an end portion of element 1, thereby preventing pressure increase of the element interior by oxygen.

When a difference in oxygen concentration is produced between outer and inner surfaces of solid electrolyte layer 5, oxygen ions are moved in solid electrolyte layer, thereby producing an electromotive force between reference and detecting electrodes 6 and 7. Thus, an output voltage is obtained, which varies in accordance with the oxygen concentration difference.

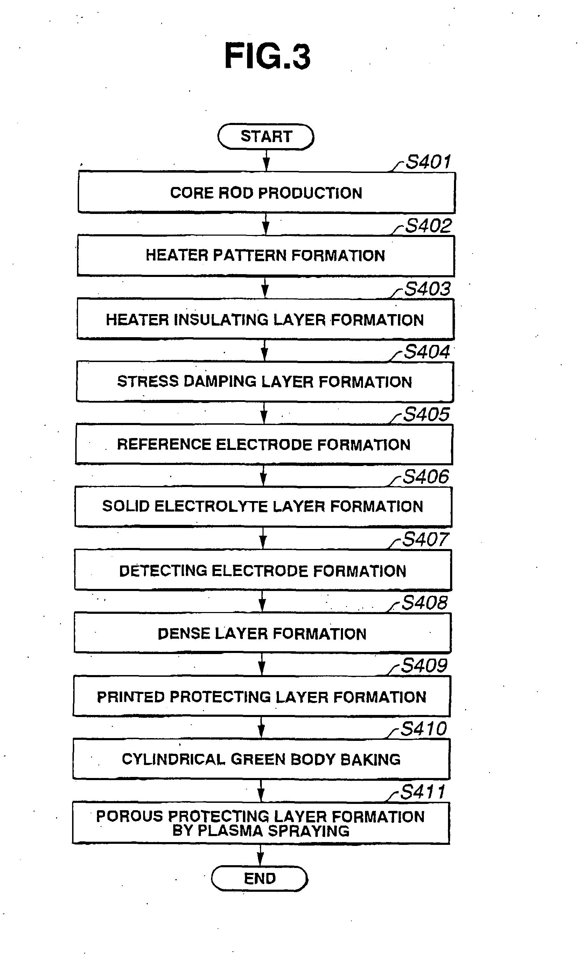

In the following, a method of producing oxygen-concentration detecting element 1 will be described in accordance with an embodiment of the present invention with reference to Figs. 3 and 4.

First, core rod 2 is produced as a cylindrical solid member from a ceramic material (e.g., alumina) through injection molding (S401). Then, while rotating core rod 2, a paste material is applied to a cylindrical half zone of outer surface 2a of core rod 2 by a curved-surface, screen printing using a heating material (e.g., platinum or tungsten), thereby forming heater pattern 3 and lead line portions 3a (S402). Then, heater insulating layer 4 is formed on heater pattern 3 and lead line portions 3a by a curved-surface, screen printing using alumina or the like (S403).

Then, stress damping layer 8 is formed on outer surface 2a of core rod 2 at a diametrically opposite zone of the printed heater pattern 3 through curved-surface screen printing (S404). Then, a conductive paste (e.g., platinum) is applied thereto by curved-surface, screen printing, thereby monolithically forming reference electrode 6 and its lead portions 6a (S405).

Then, a paste material (e.g., a mixture of zirconia and yttria) is applied in a manner to cover reference electrode 6, stress damping layer and the like as shown in Fig. 2 by curved-surface screen printing, thereby forming solid electrolyte layer 5 that is oxygen ion conductive (S406).

Then, a conductive paste (e.g., platinum) is applied to solid electrolyte layer 5 and the like by curved-surface screen printing, thereby monolithically forming detecting electrode 7 and its lead line portions 7a (S407). Then, a ceramic material (e.g., alumina) is applied to detecting electrode 7 and solid electrolyte layer 5 by curved-surface screen printing, thereby forming dense layer 9 having window opening 9a (S408). A center portion of detecting electrode 7 is exposed to window opening 9a of dense layer 9, and this exposed center portion serves as an effective electrode portion.

Then, a paste material (e.g., a mixture of insulating material and solid electrolyte material) is applied by curved-surface screen printing to entirely cover outer surface 2a of core rod 2 in its circumferential direction, thereby forming printed protecting layer 10 (S409). Upon this, the insulating material content of printed protecting layer 10 is made to be 10wt% or greater. Furthermore, 10-80 volume % of a void forming agent are made to be contained in this insulating material. Curved-surface screen printing steps are terminated by forming printed protecting layer 10.

Then, a cylindrical green body resulting from the above-mentioned curved-surface screen printings and the like is baked at high temperature (e.g., 1200-1600°C), thereby monolithically sintering this green body (S410). Upon this, the void forming agent disappears in printed protecting layer 10 to form a plurality voids therein. With this, printed protecting layer 10 is made to have a porous structure. As stated above, according to the present embodiment, printed protecting layer 10 is made of a mixture of an insulating material and a solid electrolyte material, and the insulating material content is made to be 10wt% or greater. With this, it is possible to avoid the contraction rate difference between printed protecting layer 10 and oxygen detecting laminated unit 12. Therefore, it becomes possible to prevent stress concentration to oxygen detecting laminated unit 12.

After the above-mentioned baking, porous protecting layer 11 is formed by plasma spraying to entirely cover outer surface 2a of core rod 2 as shown in Fig. 2 (S411). With this, the production of oxygen-concentration detecting element 1 is completed. The completed element 1 is built in oxygen sensor 20, as shown in Fig- 5.

The entire contents of basic Japanese Patent Application 2004-172416 (filed June 10, 2004), of which priority is claimed in the present application, are incorporated herein by reference.

Although the invention has been described above by reference to certain embodiments of the invention, the invention is not limited to the embodiments described above- Modifications and variations of the embodiments described above will occur to those skilled in the art, in light of the above teachings. For example, the above-mentioned rectangular window opening 9a of dense layer 9 may be modified to have a circular, elliptic or triangular shape. As another example, core rod 2 of cylindrical shape may be modified to have a flat outer surface. The scope of the invention is defined with reference to the following claims.

## Claims

1. An oxygen-concentration detecting element comprising:
a base member constructed of a first insulating material, an outer surface of the base member having a first position and a second position that is different from the first position;
an electric heater layer formed on the first position of the base member to generate a heat when electrically energized;
an oxygen-detecting laminated unit formed on the second position of the base member, the unit including a solid electrolyte layer and reference and detecting electrodes between which the solid electrolyte layer is operatively sandwiched, the solid electrolyte layer being activated by the heat from the electric heater layer;
a printed protecting layer covering the base member, the electric heater layer, and the oxygen-detecting laminated unit, the printed protecting layer being constructed of a mixture of a second insulating material and a solid electrolyte material, the printed protecting layer having a porous structure provided with a plurality of voids derived from a void forming agent that has been contained in an amount of 10-80 volume %, based on a total volume of the second insulating material and the void forming agent, in the second insulating material, prior to a baking for producing the oxygen-concentration detecting element; and
a porous protecting layer covering the printed protecting layer.

2. An oxygen-concentration detecting element according to claim 1, wherein the second insulating material of the printed protecting layer is in an amount of 10 wt% or greater, based on a total weight of the second insulating material and the solid electrolyte material.

3. An oxygen-concentration detecting element according to claim 1, wherein the porous protecting layer has a film thickness of 50 to 400µm.

4. An oxygen-concentration detecting element according to claim 1, wherein the base member is a cylindrical solid member having a cylindrical outer surface.

5. An oxygen-concentration detecting element according to claim 4, wherein the electric heater layer and the oxygen-detecting laminated unit are placed at diametrically opposed portions of the cylindrical solid member.

6. An oxygen-concentration detecting element according to claim 1, further comprising a stress damping layer that is intimately disposed between an inner surface of the reference electrode and the outer surface of the base member.

7. An oxygen-concentration detecting element according to claim 6, wherein the stress damping layer comprises a ceramic mixture of alumina and zirconia.

8. An oxygen-concentration detecting element according to claim 1, further comprising a dense layer that covers an outer surface of the solid electrolyte layer and the detecting electrode, the dense layer being constructed of a material that prevents penetration of oxygen gas.

9. An oxygen-concentration detecting element according to claim 8, wherein the dense layer is formed with a window opening to which a part of the detecting electrode is exposed.

10. A green body for producing an oxygen-concentration detecting element, the green body comprising:
a base member constructed of a first insulating material, an outer surface of the base member having a first position and a second position that is different from the first position;
an electric heater layer formed on the first position of the base member to generate a heat when electrically energized;
an oxygen detecting laminated unit formed on the second position of the base member, the unit including a solid electrolyte layer and reference and detecting electrodes between which the solid electrolyte layer is operatively sandwiched, the solid electrolyte layer being activated by the heat from the electric heater layer; and
a printed protecting layer covering the base member, the electric heater layer, and the oxygen-detecting laminated unit, the printed protecting layer being constructed of a mixture of a second insulating material and a solid electrolyte material, the second insulating material containing 10-80 volume % of a void forming agent that produces a plurality of voids by baking the green body to make the printed protecting layer have a porous structure.

11. A green body according to claim 10, wherein the second insulating material of the printed protecting layer is in an amount of 10 wt% or greater, based on a total weight of the second insulating material and the solid electrolyte material.

12. A green body according to claim 10, wherein the base member is a cylindrical solid member having a cylindrical outer surface.

13. A green body according to claim 12, wherein the electric heater layer and the oxygen-detecting laminated unit are placed at diametrically opposed portions of the cylindrical solid member.

14. A green body according to claim 10, further comprising a stress damping layer that is intimately disposed between an inner surface of the reference electrode and the outer surface of the base member.

15. A green body according to claim 14, wherein the stress damping layer comprises a ceramic mixture of alumina and zirconia.

16. A green body according to claim 10, further comprising a dense layer that covers an outer surface of the solid electrolyte layer and the detecting electrode, the dense layer being constructed of a material that prevents penetration of oxygen gas.

17. A green body according to claim 16, wherein the dense layer is formed with a window opening to which a part of the detecting electrode is exposed.

18. A method of producing an oxygen-concentration detecting element, comprising the steps of:
(a) preparing a base member constructed of a first insulating material to have an outer surface having a first position and a second position that is different from the first position;
(b) forming an electric heater layer on the first position of the base member to generate a heat when electrically energized;
(c) forming an oxygen-detecting laminated unit on the second position of the base member such that the unit includes a solid electrolyte layer and reference and detecting electrodes between which the solid electrolyte layer is operatively sandwiched and that the solid electrolyte layer is activated by the heat from the electric heater layer;
(d) forming a printed protecting layer to cover the base member, the electric heater layer, and the oxygen-detecting laminated unit, the printed protecting layer being constructed of a mixture of a solid electrolyte material and a second insulating material containing 10-80 volume % of a void forming agent, thereby producing a green body having the base member, the electric heater layer, the oxygen-detecting laminated unit, and the printed protecting layer;
(e) baking the green body such that the void forming agent disappears to produce a plurality of voids in the printed protecting layer and to make the printed protecting layer have a porous structure; and
(f) forming a porous protecting layer to cover the printed protecting layer.

19. A method according to claim 18, wherein the base member is formed into a cylindrical solid member by the step (a), and each of the steps (b), (c) and (d) is conducted by a curved surface screen printing.

20. A method according to claim 18, wherein the step (f) is conducted by plasma spraying.
